# EUROPEAN PATENT APPLICATION

(11) **EP 4 343 724 A1**
(43) Date of publication of application: **27.03.2024**
(21) Application number: 22196929.8
(22) Date of filing: 21.09.2022
(51) Int. Cl.: G07F 7/06, B62B 3/14, B62B 5/00, G07G 1/00

(54) **A SHOPPING CART HAVING A DETACHABLE TERMINAL**

(71) Applicant: Pentland Firth Software GmbH, 81379 München (DE)
(72) Inventor: HEINRICH, Frank, 81379 München (DE)
(74) Representative: Ter Meer Steinmeister & Partner

(57) **Abstract**

Shopping cart (1) with a detachable terminal (5), the shopping cart (1) comprises: a wagon (2) configured to be pushed in a pushing direction (R) and having a main receiving area (3); a handle bar (4) configured to be coupled to the wagon (2) and for pushing the wagon (2) in the pushing direction (R), wherein the handle bar (4) comprises a mounting element (12); and a terminal (5) configured to be coupled to the handle bar (4), wherein the terminal (5) comprises: a housing (6) with mating portions (11) configured to be coupled with the mounting element (12); a touchscreen (7) configured to output information related to a product and to receive user input related to a shopping process; an energy storage unit (8) configured to supply the terminal (5) with energy; a scanner element (9) configured to scan a code related to the product; a camera (10) configured to capture an image of the main receiving area (3) when the terminal (5) is coupled to the handle bar (4); and a processor (32) configured to identify the product by means of the code scanned by the scanner element (9) and to verify whether the identified product is visible in the image of the main receiving area (3) captured by the camera (10).

## Description

The present disclosure relates to a shopping cart having a detachable terminal configured to be coupled to a handle bar of the shopping cart, wherein the terminal comprises a scanner element configured to scan a code related to a product, a camera configured to capture an image of a main receiving area when the terminal is coupled to the handle bar, and a processor configured to identify the product by means of the code scanned by the scanner element and to verify whether the identified product is visible in the image of the main receiving area captured by the camera.

### Background and Prior Art

In recent years, the shopping procedure by which customers can shop groceries or other products has changed in many shops. Due to assistance systems, particularly self-checkout systems, for example, customers are becoming more autonomous and do not require the assistance of personnel for selection of products and/or for the check-out procedure any longer. A more efficient and comfortable shopping experience is therefore provided to the customers, and moreover, it makes the business more efficient for a retailer, as the number of staff in the shop can be reduced, while at the same time providing a high degree of assistance to the customers.

In view of this development, a new class of shopping carts which offer different functions and/or assistance has been developed.

For example, in US 2020/0210982 A1, a shopping cart is disclosed which provides a self-checkout system. The shopping cart is connected to a wireless network. The shopping cart has functions related to scanning products, displaying the cost of these products, and making a payment for the bill which corresponds to the products which are inside the shopping cart. The container of the shopping cart is provided with a scale to survey the weight of the products placed inside the shopping cart and to control whether the scanned products are inside the shopping cart.

US 2018/0370554 A1 discloses a shopping cart with integrated checkout equipment, comprising a scanner positioned on an interior edge of a basket portion of the shopping cart, a weight sensing means for determining the weight of an item placed into the basket and possibly a second scanner positioned with a tethered connection to the handle.

DE 196 43 122 A1 discloses a shopping cart for self-service shops having an electronic scale to control the weight of products in the area for receiving the products and a code reader to read the barcodes of products.

As the development of these shopping carts has been initiated only in recent years, there is still a constant need for further improvement of such shopping carts.

### Summary of the Invention

It is hence an object of the present invention and/or one of the embodiments to provide an improved shopping cart, particularly a shopping cart that assists a user during a shopping process and/or that makes it safe and/or efficient for a retailer to provide a self-checkout system, particularly a self-checkout system which prevents the users from providing incorrect data about their purchase.

It is another object of the present invention and/or one of the embodiments to provide a shopping cart with functional elements that can be retrofitted to different shopping carts.

It is a further object of the present invention and/or one of the embodiments to provide a shopping cart with functional elements in a modular configuration.

Moreover, it is an object of the present invention and/or one of the embodiments to provide a shopping cart that allows communication/interaction with the user and/or that allows to survey the shopping process of the user and/or (functions of) the shopping cart and/or that allows to enter data by the user and/or the personnel of a shop.

Further, it is an object of the present invention and/or one of the embodiments to provide a shopping cart that makes a shopping process more efficient and/or enjoyable for the user

It is also an object of the present invention and/or one of the embodiments to provide a shopping cart that makes the selling concept more efficient for the retailer.

It is another object of the present invention and/or one of the embodiments to provide a shopping cart that offers an improved and satisfying shopping experience to a user and/or create a higher customer satisfaction.

It is a further object of the present invention and/or one of the embodiments to provide a shopping cart that is simple, cost efficient and/or efficient in maintenance.

At least one of these objects is solved by the shopping cart as claimed in the independent claims. Preferred embodiments are given in the dependent claims.

According to an aspect, a shopping cart having a detachable terminal comprises: a wagon configured to be pushed in a pushing direction and having a main receiving area; a handle bar configured to be coupled to the wagon and for pushing the wagon in the pushing direction, wherein the handle bar comprises a mounting element; and the terminal configured to be coupled to the handle bar, wherein the terminal comprises: a housing with one or more mating portions configured to be coupled with the mounting element; a touchscreen configured to output information related to a product and to receive user input related to a shopping process; an energy storage unit configured to supply the terminal with energy; a scanner element configured to scan a code related to the product; a camera configured to capture an image of the main receiving area when the terminal is coupled to the handle bar; and a processor configured to identify the product by means of the code scanned by the scanner element and to verify whether the identified product is visible in the image of the main receiving area captured by the camera.

The mounting element may comprise one first extending portion in one embodiment or at least two first extending portions in another embodiment wherein the first extending portion(s) can respectively mate with one mating portion, or with two mating portions which are configured to couple the terminal to the mounting element.

The shopping cart with the detachable terminal can assist a user during a shopping process. Further, the shopping cart makes it safe for a retailer to provide a self-checkout system which prevents the users from providing incorrect data about their purchase. Also, the shopping cart may allow surveying the shopping process of the user and/or allows entering data by the user. The shopping cart may make a shopping process more efficient for the user and/or for the retailer. Moreover, the terminal can be exchanged and retrofitted to different handle bars and/or different shopping carts. In addition, the handle bar can be retrofitted to different shopping carts. The shopping cart can be configured with a terminal and a handle bar in a modular system and the shopping cart can allow communication with the user. Furthermore, the shopping cart may allow surveying the shopping process of the user and/or allows entering data by the user. The shopping cart may make a shopping process more efficient for the user and/or for the retailer.

The terminal can be released from the handle bar for maintenance, updating, replacement, charging and/or cleaning.

The wagon comprises the main receiving area which may comprise a basket, a platform, a container and/or the like. The wagon may comprise wheels, preferably four wheels, such that the wagon can be pushed when the wheels start rolling. The wheels are fully flexible and can be rotated in all directions. The wagon may also comprise a second receiving area which may be underneath the main receiving area, besides, in front of and/or behind the main receiving area configured for receiving heavy items and products and/or personal items of the user such as jackets and hand bags.

The pushing direction is considered herein as the direction along the length axis of the shopping cart, the wagon and/or the main receiving area. As the wheels may be able to take a turn, the movement may also take follow a curve but the pushing direction when described in conjunction with the geometry of the shopping cart or elements thereof, is considered as the direction when being pushed by grabbing the handle bar and pushing the shopping cart in a straight line, straight ahead in front of the user's position.

The mounting element may comprise at least one first extending portion, preferably at least two first extending portions, which may comprise a metal and/or a plastic and/or polymer, particularly a hard and stable polymer that resists high forces. The mounting element may for example have a metal core and a polymer or plastic surrounding or covering which covers the metal core at least in parts. Alternatively, the mounting element may comprise a massive polymer piece, potentially having an internal rib structure for reducing the weight.

The terminal is configured to be coupled to the handle bar, wherein the terminal comprises a housing with one or two or more mating portions which may also be considered engaging portions.

In case of two or more mating portions, the two or more mating portions may be similar or identical. Alternatively, the mating portions may differ from each other in form and size. The mating portions may be positioned on two side surfaces or near two side surfaces of the housing, preferably on the lower lateral surface of the housing which is the surface that faces away from the touch screen. In other words, the two mating portions are on opposite sides of the housing, e.g. left and right side surfaces. In case of a single first extension and a single mating portion at the housing, the mating portion may be placed centrally at the housing.

In case of two mating portions, each mating portion may be configured to be coupled with one of the at least two first extending portions which means that the first extending portion and the corresponding mating portion may be compatible engaging parts of an engagement system. The mating portions may be integral with the housing, such as holes or slits, or guide grooves, for example. The mating portions may also comprise elements which are added to the housing, such as a metal rail for improving the inserting guiding of the terminal onto the one or more first extension. The mating portions may engage with the at least two first extending portions directly or by means of an element of a mating/engagement system such as a guiding rail and/or a guiding slit either being integral with the first extending portions or being added to the first extending portions. The mating portion may comprise grooves and rails having compatible parts at the first extension.

The housing may be formed from a polymer that is hard and stable and resists strong forces. The housing may be at least in parts formed by means of injection moulding. The housing may comprise two parts such as two shell-like parts which form an inside volume when being connected with each other. The two parts may be secured two each other by means of securing means. The elements or components of the terminal may be placed inside the inner volume of the housing. The housing may completely enclose all elements or components including the processor, the scanner element and the one or more camera and can therefore protect these elements from moist, water and/or dust.

The housing may have openings for the camera and for the scanner element. At least one of the openings may be open such that the camera and/or the scanner element is exposed to the outside. Alternatively, or additionally, the openings may be closed by a transparent element such as a security glass through which the camera and/or the scanner element can capture information from the outside. The transparent element(s) may protect the camera and/or the scanner element from scratches, water, moist and/or dust.

The terminal may be secured to the mounting element by securing elements such as for example screws or hooks. Therefore, the mounting element may comprise a bore hole and the housing of the terminal may have a thread that matches the corresponding screw.

The term user comprises a customer and possibly a person who accompanies a customer during a shopping procedure. The term user may also comprise others who operate the terminal such as the personnel of a shop.

The housing may further comprise: an opening for the scanner element in an outer front surface of the housing, preferably, wherein the scanner element may be positioned inside the opening for the scanner element at a depth which is configured to achieve a focal range of the scanner element for code reading distances which are larger than the depth.

The opening for the scanner element has the function of providing a space in the housing in which the scanner element can be positioned in a "set back" position having a depth that prevents a user from presenting a printed code to the scanner element at a distance which is too close. A distance which would be too close for a scanner element to read the printed code may be a distance at which the scanner element or an optical component of the scanner element cannot focus on the printed code anymore. If for example the scanner element does not immediately recognize and/or scan the printed code presented to the scanner element, the user intuitively approaches the scanner element with the printed code at a closer distance, probably in an (impatient) attempt to make the function of the scanner element work. This might have the effect that the printed code is presented at a distance at which the scanner element cannot read the printed code anymore due to the mismatch with the focal length. It is therefore advantageous to prevent the user from approaching the scanner element with the printed code at a distance that is too close for the scanner and potentially the processor to capture and/or scan and/or recognize a sharp image of the printed code.

The depth may be considered a distance between the scanner element and the outer front surface of the housing at a predefined position in the outer front surface of the housing. Wherein the predefined position in the outer front surface of the housing and the resulting depth defines how close a user can approach the scanner element with a printed code. A code reading distance comprise a range of distances from the scanner element which are larger than the depth and preferably smaller than a maximum distance at which a printed code of a product may be presented to the scanner element such that the scanner element can capture the code in a focal range and the processor can identify the product without problems. This means that the scanner element may for example capture a sharp image of the printed code. The focal range may therefore be considered the range of distances between the scanner element and the maximum distance at which a code of a product can be captured and/or recognized. A code may not be presented to the scanner element at a closer distance than the depth due to the outer front surface of the housing which prevents a user from approaching the scanner element with the printed code at closer distances. This has the effect that the scanner element or the optical elements of the scanner element has/have an optical defocused range at potential code reading distances. Therefore, the user always finds the right distance at which the code is presented given that the distance is not too large, namely larger than a maximum distance at which the scanner element cannot capture the printed code and/or the processor cannot recognize the printed code at these distances anymore.

The opening for the scanner element may be considered a hole in a plane, wherein the plane is defined by the outer front surface of the housing. The opening for the scanner element in the housing of the terminal is not to be confused with the scanner element recess which is a recess formed in the mounting element. The opening in the housing and the recess in the mounting element prevent that the scanner element is blocked by the housing or by the mounting element, such that the scanner element can "view" a presented code right in front of the scanner element.

The set-back position of the scanner element in the terminal housing makes it easy and efficient for a user to operate the terminal and therefore allows an efficient shopping procedure. It also prevents the user from making a mistake when scanning a printed code. Overall, this feature provides an improved and satisfying shopping experience to a user.

The opening for the scanner element may also have the function of a protection of the scanner element such that the scanner element is not easily damaged. Further, the scanner element maybe protected from damage by a protection glass.

The housing of the terminal may also comprise an opening for the camera. The opening for the camera and the opening for the scanner element may have at least partially similar purposes. The opening for the camera may also serve the protection of an element, namely the camera. The camera may also be protected from scratches, dust, water, mechanical impact, or others by a protection glass.

The depth may be in a range between approximately 0,5 cm and 8 cm, preferably between approximately 1 cm and 3 cm. These ranges of potential depths are useful to achieve the effect of preventing a printed code from being presented in a too close distance.

The opening for the scanner element may define a viewing axis of the scanner element which forms an obtuse angle with the pushing direction when the terminal is coupled to the handle bar.

The effect of this orientation is that a user can present a printed code to a scanner element from his position in which he is located when pushing the shopping cart in the pushing direction. Preferably, the printed code is presented to the scanner element from a below direction. In this case, the viewing axis of the scanner element is directed towards the user in his/her position when pushing the shopping cart into the pushing direction, preferably directed more to the floor. The angle between the viewing axis of the scanner element and the vertical direction, i.e. the axis being perpendicular to the plane floor (direction of force of gravitation) can be in the range between approximately 25° and 80°, preferably between approximately 40° and 60°. This makes it easy and comfortable for a user to scan the printed code comprising presenting the printed code to the scanner element. Users of different heights may equally and easily present the printed code to the scanner element. Further, this feature provides an improved and satisfying shopping experience to a user.

The housing may comprise an opening for the camera which defines a viewing axis of the camera which forms a sharp angle with the pushing direction when the terminal is coupled to the handle bar.

The viewing axis of the camera is directed towards the main receiving area such that an image of the main receiving area may be captured, preferably of the entire main receiving area such that no added product is missed when being added to the main receiving area.

The viewing axis of the scanner element and viewing axis of the camera may enclose an angle which is between 150° and 80°, preferably between 120° and 90°.

These ranges of angles between the viewing axis of the scanner element and viewing axis of the camera are advantageous when the terminal is coupled to the mounting element, as the camera can capture an image of the main receiving area and the scanner element can easily be approached by a user from his position when presenting a printed code. This feature may therefore create a higher customer satisfaction.

The terminal may further comprise an optical output which is visible to a user when the terminal is coupled to the handle bar. The optical output may comprise a plurality of LEDs.

An optical output may be used for communication with the user. Maybe the optical output indicates a direction in which the user should navigate to find a product in the shop. The optical output may also indicate to a user that an error has occurred during the shopping process. In case of an error, it may be that a printed code was not scanned properly or the camera could not capture an image or the processor could not recognize the product associated with the scanned code in the main receiving area. Further, the optical output may also be used for communication with the retailer or personnel of the shop. For example, the terminal might indicate that it requires a charging procedure or an update or maintenance. A plurality of LEDs is useful, as multiple colors and/or patterns of light signals may be emitted. These features allow for a clear and simple communication with the user and may therefore create a higher customer satisfaction.

The optical output may at least partially surround the touchscreen. The optical output may be positioned at least one an upper edge of the housing. The optical output may partially or completely surround the touchscreen.

The optical output may be positioned in a position of the housing that is easily visible by a user and/or personnel of a shop such that the light signals can be easily seen and are not overseen. The light signals may also comprise an alarm signal, for example to indicate that the energy storage unit is running out of power or for example that a customer hasn't paid and leaves the shop with the shopping cart. These features allow for a clear and simple communication with the user and may therefore create a higher customer satisfaction. Further, the degree of security can be improved as the optical out may be part of a theft protection.

The processor may be configured to control the optical output to emit light of a predefined color and/or at a predefined frequency which is characteristic for a certain information.

The processor may recognize a situation in which a certain signal should be displayed or presented to the user via the optical output. The processor may then associate the situation with a characteristic and/or predefined signal and send a command that initiates the optical output to indicate that certain situation to the user by presenting the signal. This is a simple and relatively cheap way to indicate a (not so complex) situation. Therefore, the user might have to know what the signal means, i.e. the situation that is indicated by the signal. The user may however also intuitively understand what the signal means, for example when the direction is indicated by the optical output. Therefore, the optical output may also have a certain shape, for example the shape of an arrow. The optical output may also have the shape of a battery to indicate that the battery is running out of charge.

The terminal may therefore have multiple optical outputs, such as two, three, four, five or even up to 15 optical outputs. Potentially even more optical outputs may be integrated in the terminal. An optical output may be one single LED for example. An optical output may however also be a plurality of LED which appear to form a unit potentially in the form of a certain shape. If five LEDs are used to form an arrow, these five LEDs may be considered one optical output.

The terminal may also have a communication function, which may comprise a knob and a communication device through which the user can reach the personnel of a shop when human assistance is required, for example when a product shelf is empty or a product is not in its indicated position.

These features allow for a clear and simple communication with the user and may therefore create a higher customer satisfaction.

The terminal may further comprise at least one of the following elements: a GPS antenna as an element of a geofence system, a light sensor configured to sense ambient light, a sound output comprising, such as an alarm and/or a beeper.

A geofence system may allow to survey the position of a shopping cart inside an indoor environment. Further, the geofence system may allow to navigate the user through a shop along a path, for example an optimized path to efficiently find the products. This may particularly be helpful in huge stores such as a furniture shop or a building supplies store, where long distances must be taken by a user to find the right products. This may help to make the shopping procedure more efficient and helps the user to save time and avoid unnecessary walking distances. The geofence system may also help the shop owner to recognize when a shopping cart exists the geofence area, as for example an indoor hall or a parking space. This may help to prevent that the shopping cart is stolen.

The sound output may output an alarm or the voice of the personnel of a shop who might give advice or assistance to a user. The sound output may also output information, advertisement and/or music. The sound output may also provide information to a user about a product associated with the scanned code. Overall, these features help making it easy and efficient for a user to operate the terminal and/or realize the shopping procedure. The features also create customer satisfaction.

The processor may be configured to adjust a light emitted by the touchscreen based on the ambient light sensed by the light sensor.

It may be possible that the ambient light conditions change in different areas of the shop and therefore, the touchscreen might be not bright enough for a user's eye to recognize the display. In this case, the light sensor may sense the light condition. The processor may receive a value from the light sensor and control the brightness of the touchscreen based on this value. If the light conditions are good, i.e. the ambient light is bright, the processor may control the touchscreen to turn down the brightness so safe energy. This makes it comfortable for the user to use the terminal and at the same time a very efficient terminal is realized.

The sound output may be configured to output an instruction from shop personnel and/or wherein the sound output may be or may comprise a beeper configured to output a beeping signal when the scanner element scans a presented code.

The sound output might hence comprise a beeper which makes the typical noise with which the user is familiar, indicating that a printed code has been correctly scanned, which generates a satisfying experience knowing that the scanning of a code has been successful. Overall, these features help making it easy and efficient for a user to operate the terminal and/or realize the shopping procedure. The features also create customer satisfaction.

The terminal may further comprise: a movement recognition element configured to sense a movement in front of the scanner element, and/or a light emitting element configured to emit a light, particularly a red light, in front of the scanner element, preferably wherein the light is emitted by the light emitting element when a movement is sensed by the movement recognition element.

The terminal might activate the scanner element when a movement is recognized in front of the scanner element. This helps saving energy, as the scanner element is only activated when required. Further, the scanner element may automatically be automated when a movement is recognized which makes it simple for a user to operate the scanner element. The light emitted in front of the scanner element may be used to guide a user how to position the printed code in an optical position. The light may project a pattern for navigating the user when presenting the code to the scanner element and/or indicating an optimal position for presenting the printed code. Therefore, the (red) light may project a line pattern and/or a round pattern and/or a dot onto the printed code. The (red) light may also serve to illuminate the printed code which is advantageous when the ambient light is not enough for illumination of the printed code. Overall, these features help making it easy and efficient for a user to operate the terminal and/or realize the shopping procedure. The features also create customer satisfaction.

The terminal may further comprise an interface, e.g. a socket for data transfer or for transferring data with an additional device, particularly a USB interface.

It may be very likely that data are exchanged between the terminal and another device, such as a credit card terminal, a phone, a central computer, a cloud or the like. In this case, the data may be transferred by means of a USB interface which is secure against hacking. Alternatively, or additionally, the data may be transferred via wireless network, e.g., internet, Bluetooth or the like. Data may be transferred to update an operating system run on the terminal and/or to update product information and/or other data which may for example be related to functions of the terminal.

The data transfer interface may be configured to be coupled to a credit card terminal and/or a credit card reader.

If the terminal is connected to an external credit card reader positioned on the handle bar or even a credit card reader which is integrated in the terminal, a bill for the list of products associated with the scanned code and being positioned in the main receiving area may be transferred to the credit card reader and the user can pay by means of a self-checkout. The bill may additionally or alternatively be transferred to an external credit card terminal where the payment is performed under surveillance of a personnel of the shop.

The shopping cart may comprise the following all together: the wagon configured to be pushed in the pushing direction and having the main receiving area; the handle bar configured to be coupled to the wagon and for pushing the wagon in the pushing direction, wherein the handle bar comprises the mounting element which comprises at least one first extending portion; and the terminal configured to be coupled to the handle bar, wherein the terminal comprises the housing which comprises at least one mating portion, wherein the mating portion is configured to be coupled with/to the one first extending portion.

The shopping cart further allows for a retailer to provide the handle bar and the terminal as a system that matches uniquely and the user may not use an external terminal due to the matching between the two first extending portions of the mounting element and the mating portions of the housing of the terminal.

Particularly, the shopping cart may comprise the following all together: the wagon configured to be pushed in the pushing direction and having the main receiving area; the handle bar configured to be coupled to the wagon and for pushing the wagon in the pushing direction, wherein the handle bar comprises the mounting element which comprises at least two first extending portions; and the terminal configured to be coupled to the handle bar, wherein the terminal comprises the housing which comprises at least two mating portion, wherein each mating portion is configured to be coupled with/to the one of the at least two first extending portions.

All the advantages which are outlined for the shopping cart with at least two first extending portions also apply to the shopping cart with only one first extending portion and having a terminal with only one mating portion. Further, the following features and embodiments also apply to the shopping cart with only one first extending portion and having a terminal with only one mating portion given that the at least two first extending portions in the embodiments are replaced by one first extending portion and the at least two mating portions are replaced by one mating portion.

Below, multiple features and embodiments are described which may apply to the shopping cart having the mounting element with at least two first extending portions or having the mounting element with the one first extending portion.

The terminal may further comprise a touchscreen configured to output information related to a product and to receive user input.

The terminal may have an upper surface two lateral side surfaces a lower surface, a front and a rear surface.

The terminal may particularly comprise a touchscreen at the upper surface configured to output information, e.g. related to a product or advertisement and to receive a user input. The touchscreen may cover nearly the whole upper surface. There may be a bezel around the touchscreen.

The terminal may further comprise or accommodate an energy storage unit configured to supply the terminal with energy.

The terminal may further comprise a scanner element configured to scan a code related to the product.

Furthermore, the terminal may further comprise a camera configured to capture an image/a picture of the main receiving area.

The terminal may additionally or alternatively further comprise a processor or microcontroller for operating the elements or components of the shopping cart. The processor or microcontroller may be configured to identify the product by means of the code scanned by the scanner element and to verify whether the identified product is visible in the image of the main receiving area captured by the camera.

The touchscreen allows for a user to input data into the terminal, such as a product or a shopping list. Further, the touchscreen may display information related to a product - potentially a product that relates to a printed code, such as a bar code, which has been presented to the scanner element by the user. Moreover, the touch screen may indicate where to find the products of the shopping list in the shop.

The energy storage unit may comprise a battery and/or an accumulator which supplies the functional elements of the terminal with energy.

The scanner element may be configured to scan a code related to the product, such as a bar code, a QR code, a number and/or sign code. The scanner element may comprise an optical scanner and/or a scanner camera, i.e., a camera which may have a lens with a fixed or a flexible focus (autofocus). A lens with a fixed focus may comprise a solid-state lens and a lens with a flexible focus may comprise a liquid lens and/or a soft and flexible lens. The scanner element may preferably emit a light from a light source to illuminate the code for better reading. The light source may for example comprise a red-light source. Preferably, the scanner element comprises a scanner camera with or without a red-light source that is directed towards and through an opening in the housing of the terminal to illuminate an area in front and in the viewing angle of the scanner element such that a user can present the printed code to the scanner element being illuminated by the red light. The light of the scanner element may also serve as a guide for the user to position the printed code in the centred position in front of the scanner element.

The camera of the terminal may be configured to capture an image of the main receiving area where products will be placed. Preferably, the camera is configured and adjusted in a way such that an image is captured of the majority of the main receiving area, such that all products which are placed in the main receiving area can be captured in the image.

The processor may be configured to relate a product and/or product information of a product to a printed code which is associated with the product, and which is presented to the scanner element by the user. The processor may receive an image of the main receiving area captured by the camera. Further, the processor may be configured to recognize that the product being associated with the printed code has been added onto or into the main receiving area.

The procedure by which a user can operate the terminal may be as follows to give one of potential different examples: The user might for example enter a shopping list into the terminal by means of the touch screen. The touch screen might display the list and navigate the user through the shop to find the entered products. The user may find the product in the shelf. The user may present a code, preferably a printed code on the product or remote from the product on a tag to the scanner element. The scanner element may recognize a movement in front of the scanner element and activate the light source to illuminate the code with a light and to guide the user to position the code in a centred position in front of the scanner element. The scanner element may automatically scan the code and transmit the information to the processor which processes the captured code. The processor may associate the code to an article for example by obtaining an entry from a list of products stored in a database internally and/or items of a database stored externally from an external source via internet for example or from a memory which may be part of the terminal. When associating the code with the product, there may be information related to the product displayed on the touch screen, such as the price or other information related for example to nutrition values, to the producer of the product, storage conditions and/or the expiration date of the product. When the user decides to purchase the product, it may be placed into the main receiving area. In that case, the camera may capture an image of the main receiving area including the added product. The processor may recognize from the scanned code and the captured image that the scanned code is correctly associated with the added product, such that the bill is produced including this product. Finally, after terminating the shopping process, the bill might be transferred to an external cash register and/or to a credit card terminal which may be external or positioned on the handle bar. This shopping procedure may be only understood as an example for how the shopping card may be used and operated in an embodiment.

The scanner element and/or the camera may be configured to capture information of documents such as a passport, which becomes important when for age control of the customer. If the customer might for example want to purchase alcohol, cigarettes or other products which require age control, the age may be controlled by analysing the information from a presented passport by the processor.

The at least one or the at least two first extending portions may extend in an extending direction which forms a sharp angle with the pushing direction. The extending direction may be perpendicular to a length axis of the handle bar.

The at least two first extending portions may extend preferably parallel to each other. The sharp angle between the first extending portions and the pushing direction may be between approximately 0,5° and 65°, preferably between approximately 45° and 3° and more preferably between approximately 25° and 5°.

This sharp angle allows the coupling of the terminal to the handle bar in a way such that the user has a good view onto the terminal from his position behind the shopping cart when pushing the shopping cart for example. A good view would be a view which is perpendicular to the touch screen of the terminal when the user is in his natural position behind the cart, i.e. a position in which the user is not required to bend or bow or change his position to gain an optimal view of the touch screen. Further, the angle may allow to couple the terminal to the handle bar in a way such that no or only little reflections from the ambient light and/or the above artificial light sources cause disturbing reflections. In other words, the sharp angle has the effect that the terminal can be coupled to the handle bar in a more upright position or orientation, i.e. position or orientation in which the plane of the touch screen is not parallel to the pushing direction but is oriented towards the face of a user.

Alternatively, the first extending portions and the pushing direction may be oriented in parallel to each other.

The mounting element may be formed integral with the handle bar.

An integral mounting element of the handle bar does not require a step of fixing the mounting element to the handle bar. Further, the integral mounting element may be provided in an orientation that has a fixed orientation with respect to the handle bar. In other words, it may be impossible to rotate or otherwise move the integral mounting element with respect to the handle bar. Further, the production of the handle bar with the integral mounting element is efficient. The production may for example comprise steps of 3D-printing and/or injection moulding.

The handle bar may comprise two gripping portions along a direction of a length axis of the handle bar which forms substantially a right angle with the pushing direction, wherein the mounting element may be positioned between the two gripping portions.

The gripping portions may be ergonomically formed for a user's hands such that a user can hold tight to the gripping portions in a comforting way and/or such that pushing the shopping cart does not exhaust and/or causes pain to the user's wrists. The gripping portions may be formed in a substantially oval form or in another form that is not exactly round and makes it easy for a user to hold tight to the gripping portions when pushing the shopping cart.

The handle bar may comprise two connecting arms each one extending from one of the two gripping portions along a direction of a connecting arm axis, wherein the direction of the connecting arm axis may be either parallel to the pushing direction or may form a sharp angle with the pushing direction. The two connecting arms may be detachable from the two gripping portions and/or the two connecting arms may be detachable from the connection arms of the wagon.

The connecting arms are configured for connecting, adjusting, affixing and/or coupling the handlebar to the wagon. The wagon may therefore provide connecting portions on its back side with respect to the pushing direction. The connecting arms may be configured to mate and/or engage with the connecting portions of the wagon. Therefore, the connecting arms may be have recessions formed in a shape that matches the connecting portions of the wagon. If the connecting arms can be removed from the handle bar, the connecting arms may be exchanged based on the shape of the connecting portions of the wagon. Therefore, the handle bar may be compatible with different wagon types. For example, the connecting arm may have a recession or hole that has an oval shaped cross section.

The connecting arms may be affixed to the connecting portions of the wagon by means of fixation elements, comprising for example a nut and corresponding engaging counter fixation elements, comprising for example a screw.

The handle bar may comprise a core element extending between the two gripping portions along the direction of the length axis of the handle bar. The core element may comprise a steel bar such as a hollow steel bar. The handle bar may also comprise a sheathing element which may at least partially surround the core element.

A core element which comprises a hollow steel bar is robust and stabile. At the same time the steel bar which may be at least in parts hollow, has less weight than a massive steel bar. Alternatively, the core element may comprise a different metal or even another material such as a hard polymer which has a very stable form.

The sheathing element may comprise a soft polymer, a rubber material, and/or a thermal shrinking sleeve which covers the core element, and which makes it more comfortable for a user to hold tight to the gripping portions of the handle bar. A shrinking sleeve maybe a thermoplastic hose into which the core element is positioned before the shrinking sleeve is treated with heat to shrink and adjust to the shape of the core element. Alternatively, the sheathing element can have a final form having a pipe like opening through which the core element can be stuck. The sheathing element may have additional features with respect to the shape as compared to the core element. For example, the sheathing element may be formed ergonomically.

The core element may have a cross section at least on both end portions of the core element in an oval shape or a polygonal shape, preferably a hexagonal shape. A cross section which deviates from a round shape may prevent the sheathing element from moving and/or rotating against the core element. This form keeps the sheathing element in a fixed predefined position with respect to the core element. A cross section which deviates from a round shape may also define a unique orientation in which the connecting arms can be coupled to the core element, such that the correct configuration of the handle bar and the connecting arms can be achieved intuitively.

Each one of the two connecting arms may comprise a reception recess which may have a shape that corresponds to the cross section of the core element such that each one of the two connecting arms is configured to be plugged on one of both end portions of the core element.

The connecting arms may match the shape of the core element such that the two connecting arms can be used together with the handle bar as modular elements. These (three) modular elements are fitted to each other by the shape of the cross section of the core element and by the shape of the reception recess.

Each one of the two connecting arms may comprise an orientation element and each one of the two end portions of the core element may comprise a counter orientation element configured to allow only one orientation in which each connecting arm is coupled with the corresponding end portion of the core element. The orientation element or the counter orientation element may be a notch for example, whereas the other one of the orientation element or the counter orientation element may then be a ridge that matches the notch such that the orientation element and the counter orientation element can engage and/or mate and therefore define a single orientation and/or configuration in which the connecting arms are coupled to the end portions of the core element.

The connecting arm may have a portion that is connected and/or connectable with the gripping portion and/or the core element of the handle bar and a portion that is connectable with the cart, wherein these two portions enclose a substantially right angle, i.e. an angle between approximately 80° and 100°. In other words, the connecting arm is an angle part and/or an angled joint between the handle bar and the cart.

The mounting element may further comprise two second extending portions, wherein each one of the two second extending portions may extend in an opposite direction of one of the first extending portions.

The second extending portions may be considered elongations of the first extending portions into the opposite direction thereof. The first extending portions not only serve for the engagement between the mounting element and the terminal but also provide support to the terminal from underneath when the terminal is coupled to the mounting element. The second extending portions may contribute to the support and provide a larger surface on the opposite side of the first extending portions to support the terminal from underneath, on this side. The second extending portions and/or the first extending portions may comprise boreholes through which the terminal can be affixed to the mounting element by means of a screw that is screwed into a thread of the terminal.

The mounting element may further comprise an additional supporting portion. The housing of the terminal may then comprise an additional mating portion configured to at least partially receive the additional supporting portion.

The additional supporting portion may be substantially centered on the mounting element. Further, the additional supporting portion may provide further support to the terminal from underneath when the terminal is coupled to the mounting element. Further, the additional supporting portion may also provide an predefined and unique orientation of the terminal with respect to the mounting element. The additional supporting portion may have the form open elevation. Further the additional supporting portion may comprise a guiding rail, wherein the terminal may then comprise a counter element to the guiding rail. The guiding system comprising the guiding rail and the counter element to the guiding rail can provide further support and/or increase the degree of boundary conditions to define the orientation in which the terminal is coupled to the mounting member.

Each mating portion may be configured to be coupled with one of the at least two first extending portions by means of a slider-rail system which may comprise: a rail on each one of the at least two first extending portions; and a slider on each one of the at least two mating portions. Alternatively, the slider-rail system may comprise: a rail on each of the at least two mating portions; and a slider on each one of the at least two first extending portions.

The engagement system (also considered guiding system, particularly slider-rail system) may therefore comprise a slider-rail system. The slider-rail system may comprise a dovetail guide. A slider-rail system and particularly a dovetail guide limits the degree of freedom for a relative movement between the terminal and the mounting member to substantially one degree of freedom, namely along the length axis of the rail and/or guide. The clearance and/or tolerance in other directions is ideally limited to a minimal amount such that the terminal cannot tilt and/or vibrate against the mounting member when the terminal is coupled to the mounting element. In a slider-rail system, the terminal can be slid along the mounting element, preferably in one movement direction, in a mounting or demounting process.

Similarly, the terminal may accordingly comprise an additional mating portion which may be configured to be coupled with the additional supporting portion of the mounting element by means of a slider-rail system which may comprise: a rail on the additional mating portion of the terminal; and a slider on the additional supporting portion of the mounting member. Alternatively, the slider-rail system may comprise: a rail on the additional supporting portion of the mounting member; and a slider on the additional mating portion of the terminal.

Further, the terminal may accordingly comprise a mating portion on one of the second extending portions which may be configured to be coupled with the corresponding one of the second extending portions by means of a slider-rail system.

Each mating portion may be configured to be coupled with one of the at least two first extending portions by means of a coupling movement along one single movement direction, wherein the movement direction may be parallel to the extending direction of the at least two first extending portions.

For example, in case when at least one of the first extending portions comprises a rail that extends along the length axis of the first extending portion, the terminal can be coupled to the mounting element by sliding the terminal with a corresponding slider on the terminal along the rail of the first extending portion in one direction that is parallel to the length axis of the first extending portion. The movement direction may therefore be characteristic to the shopping carts provided to a retailer such that the retailer recognizes the shopping carts by the characteristic and/or unique movement required to couple the terminal to the mounting element.

The housing of the terminal may be form-fit with the mounting element of the handle bar when the terminal is coupled to the handle bar and/or the terminal may form a plane surface with the mounting element of the handle bar after being coupled with the mounting element.

The terminal which is form-fit and/or forms a plane surface with the mounting element can have an improved aesthetic appearance. The combination of the terminal with the mounting element may appear to a viewer as a unit which may also appear to be permanently affixed to the handle bar. In other words, it may not be visible to a viewer that the terminal and the mounting element are two separate parts. Further, the combination of the terminal with the mounting element may appear to a viewer in the form of a smooth element with rounded edges, as for example a pebble. This further improves the aesthetic appearance and provides the shopping cart with a unique appearance having a high degree of (brand) recognition. Further, such shapes are not only pleasing to the eye but also provide a comfort when touching the terminal in a case when the terminal should be removed from the mounting element, for example.

The mounting element may comprise: an operating recess configured to allow for a user to operate an on-off-button of the terminal when the terminal is coupled to the handle bar, wherein the on-off-button may be positioned on a lower portion of the housing; and/or a scanner element recess for allowing the scanner element to scan the code.

The mounting element should not cover certain positions associated with functions of the terminal, therefore, the mounting element may have recesses to either allow for a user to reach these positions, such as the on-off-button or to allow the terminal to function properly, for example by not covering the scanner element such that the scanner element can capture and/or scan a printed code presented in front of the scanner element.

Further, the housing may also comprise an opening for the on-off-button which allows to position the on-off-button in a deeper position in the terminal as compared to the general surface of the housing of the terminal. Therefore, a user may then only operate the on-off-button when reaching with a finger and/or a tool through the opening for the on-off-button to activate and/or deactivate the terminal via the on-off-button. This can prevent a user or buyer from activating and/or deactivating the on-off-button by mistake. Further, the opening for the on-off-button and the on-off-button itself can be positioned in a somewhat hidden position of the terminal, such that a user needs to know where to find the on-off-button. This has the effect that only a retailer and/or the personnel of a shop may know how to operate the on-off-button, whereas the ordinary shopping cart user neither knows how to operate the on-off-button nor operates the on-off-button by mistake.

The mounting element may comprise a rib structure. A mounting element with a rib structure is stable and has less weight, as it does not need to be realized as an element from a massive material. Further, less material is used to realize the mounting element. Therefore, injection moulding and/or 3D printing may be used to produce the mounting element.

### Brief Description of the Drawings

Embodiments of the present invention are described in the following by means of the figures in more detail. The figures display different features off embodiments. The features are not limited to these embodiments. All the features of the embodiments can generally be combined if they are not contradicting each other. Further, features of the embodiments which are not essential to the embodiments may also not be part of the embodiments.
**Fig. 1a** is a scheme of a shopping cart in a perspective view according to an embodiment;
**Fig. 1b** is a scheme of the shopping cart of **Fig. 1a** in a top view;
**Fig. 2a** is a scheme of the shopping cart of **Fig. 1a** in a side view;
**Fig. 2b** is a scheme of the shopping cart of **Fig. 1a** in a detailed view;
**Fig. 3a** is a scheme of a fixation element (right) and a counter fixation element (left) for fixation of a handle bar on a wagon according to an embodiment;
**Fig.3b** explosion scheme of the handle bar on the wagon of **Fig. 1b** in a detailed view denoted "A";
**Fig. 4a** is a scheme of the terminal on the handle bar of **Fig. 1a** in a detailed view as it would be seen when used by a user while pushing the shopping cart;
**Fig. 4b** is a scheme of the terminal on the handle bar of **Fig. 1a** in a view from the side of the main receiving area;
**Fig. 5a** is a scheme of the terminal on the handle bar of **Fig. 1a** in a detailed side view;
**Fig. 5b** is a scheme of the terminal on the handle bar of **Fig. 1a** in a perspective view from above;
**Fig. 6a** is a scheme demonstrating the general concept of how the terminal is affixed to the handle bar of an embodiment as it would be seen when used by a user while pushing the shopping cart;
**Fig. 6b** is another scheme demonstrating the general concept of how the terminal is affixed to the handle bar of **Fig. 6a** as it would be seen when used by a user while pushing the shopping cart;
**Fig. 6c** is a scheme demonstrating the general concept of how the terminal is affixed to the handle bar according to another embodiment;
**Fig. 7** is a scheme of electronic elements or components comprised by the terminal and/or connected to the terminal;
**Fig. 8a** is a scheme of the terminal on the handle bar of **Fig. 1a** in a view from below when being coupled to the shopping cart or when being uncoupled and tilted;
**Fig. 8b** is a scheme demonstrating the concept of how the terminal is affixed to the handle bar of Fig. **1a** in a perspective front view;
**Fig. 9a** is a scheme of the terminal on the handle bar of **Fig. 1a** in a view from the below front side from which the user would present a printed code to the scanner element;
**Fig. 9b** is another scheme demonstrating the concept of how the terminal is affixed to the handle bar of Fig. 1a in a perspective front view;
**Fig. 10a** is another scheme of the terminal on the handle bar of **Fig. 1a** in a view from below when being coupled to the shopping cart or when being uncoupled and tilted;
**Fig.10b** scheme of the terminal on the handle bar of **Fig.1a** in a tilted perspective view from below;
**Fig. 11a** is a scheme of the handle bar of **Fig. 1a** without the terminal to demonstrate the mounting element in a perspective view;
**Fig. 11b** is a scheme of the handle bar of **Fig. 1a** without the terminal to demonstrate the mounting element in a view from the side of the main receiving area;
**Fig. 11c** is a scheme of the handle bar of **Fig. 1a** without the terminal to demonstrate the mounting element in a side view;
**Fig. 12a** is a scheme of the handle bar of **Fig. 1a** without the terminal to demonstrate the mounting element in a detailed view as it would be seen when used by a user while pushing the shopping cart;
**Fig. 12b** is a scheme of the handle bar of **Fig. 1a** without the terminal to demonstrate the mounting element and the core element of the handle bar in a detailed side view;
**Fig. 12c** is a scheme of the handle bar of **Fig. 1a** without the terminal to demonstrate the mounting element in a tilted perspective view from the front side;
**Fig. 13a** is a scheme demonstrating the general concept of how the terminal is affixed to the handle bar according to another embodiment as it would be seen when used by a user while pushing the shopping cart; and
**Fig. 13b** is another scheme demonstrating the general concept of how the terminal is affixed to the handle bar of **Fig. 13a** as it would be seen when used by a user while pushing the shopping cart.

### Detailed Description of the Embodiments

The same reference signs have been chosen in different figures for the same features or for similar features having substantially the same effects. A repeating and/or redundant description for features which are repeatedly displayed in different figures is avoided. The directions "on the right" and "on the left" refer to the sides relative to a user when pushing the shopping cart along the pushing direction, i.e., straight ahead.

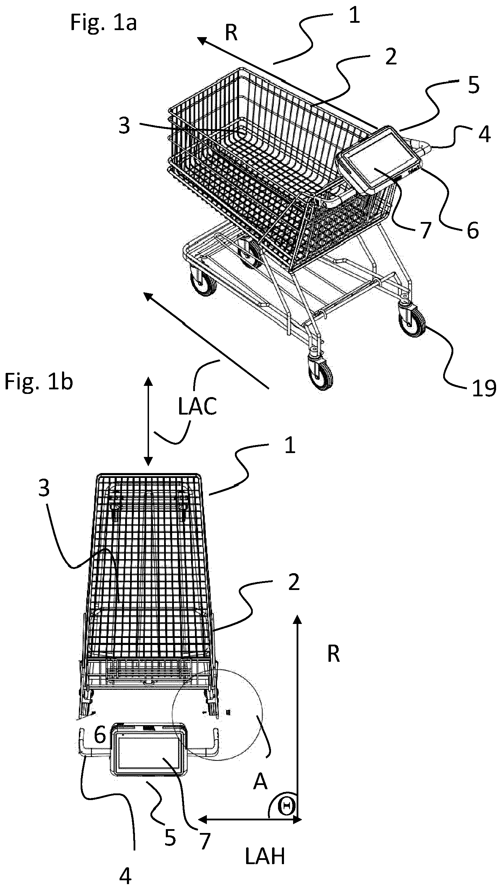

**Fig. 1a** is a scheme of a shopping cart 1 in a perspective view according to an embodiment. The shopping cart 1 may be pushed by a user into the pushing direction R. The shopping cart 1 comprises a wagon 2 with a main receiving area 3. The wagon is provided with four wheels 19 which start rolling when the shopping cart is pushed in the pushing direction R. A handle bar 4 is coupled to the wagon 2. A terminal 5 having a housing 6 and a display/touchscreen 7 is coupled to the handle bar 4. The pushing direction R is defined as being parallel to a length axis LAC of the shopping cart 1. The wagon 2 does not necessarily comprise a basket with a basket frame or a mesh structure which encloses the main receiving area 3. It can also just provide a platform considered as the main receiving area 3, where the products can be positioned.

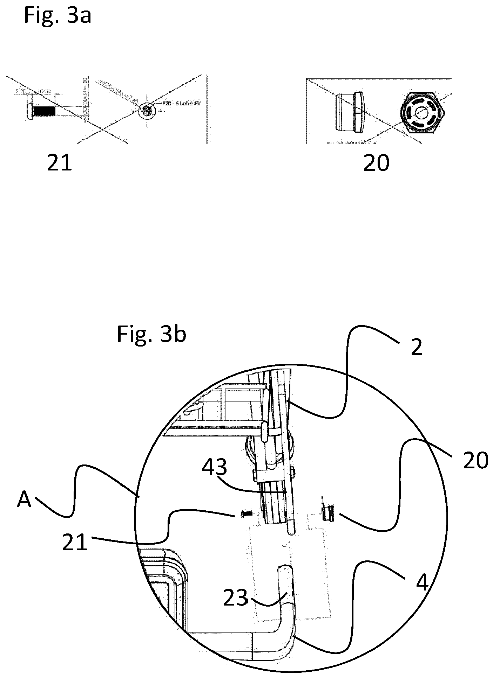

Fig. 1b is a scheme of the shopping cart 1 of Fig. 1a in a top view, with the exception that the handle bar 4 is not coupled to the wagon 2 such that the scheme appears as an explosion view. It is indicated that a length axis LAH of the handle bar 4 encloses an angle Q with the pushing direction R which is substantially parallel to the length axis LAC of the shopping cart 1 and the wagon 2. The angle Q is preferably a right angle (90°), as shown in the figure and as usual for regular shopping carts. Fig. 1b indicates with a circled region A elements which are illustrated in Fig. 3b in more detail.

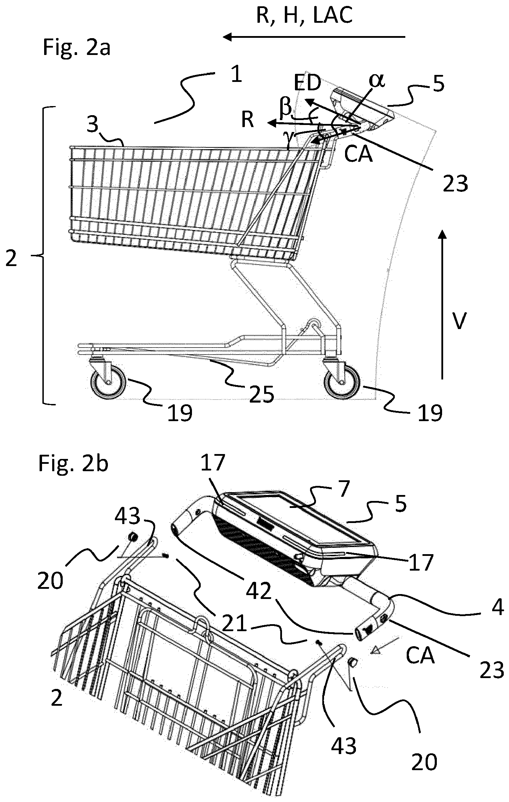

Fig. 2a is a scheme of the shopping cart 1 of Fig. 1a in a side view. In this drawing, the handle bar 4 is coupled with the wagon 2. The wagon also comprises a second receiving area 25 for products which is below the main receiving area 3. The handle bar 4 comprises connecting arms 23 on its right and left side for coupling or connecting the handle bar 4 to the wagon 4. In Fig. 2a, the vertical direction V is indicated which is parallel to the G-force direction and perpendicular to the floor, the horizontal direction H and the pushing direction R, given that the floor is a plane surface which is not tilted with respect to the G-force direction, such that the floor does not have a slope.

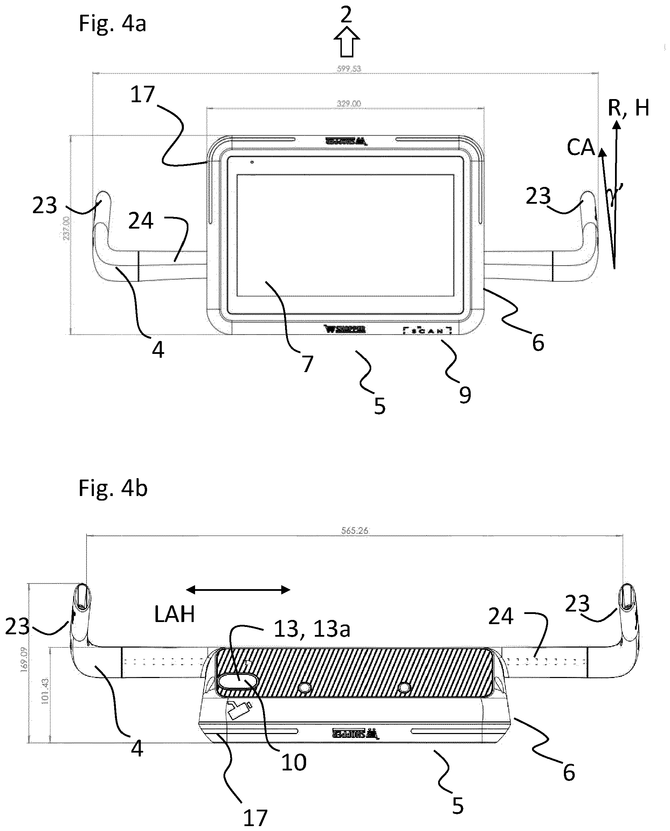

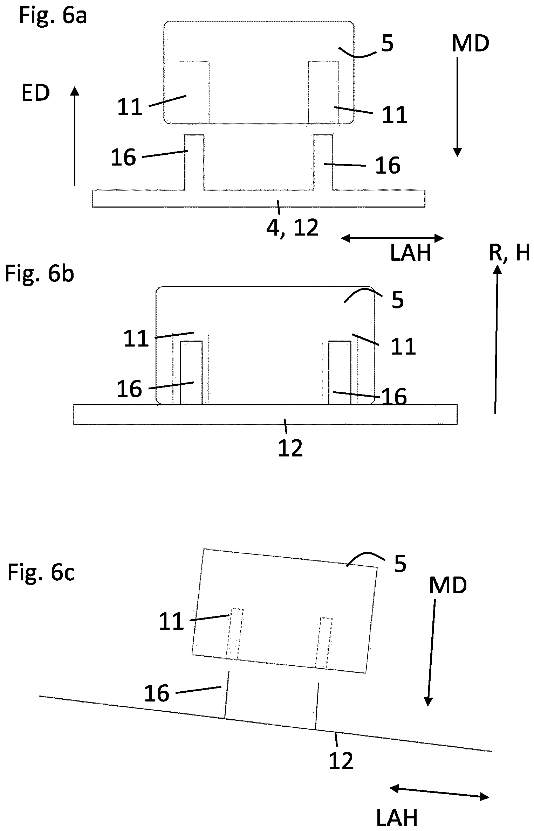

The connecting arms 23 each have an axis CA along which they extend, wherein the axes CA of both connecting arms 23 are parallel. The axes CA of the connecting arms 23 point slightly downwards, i.e., towards the floor when being correctly coupled to the wagon 2. The axes CA of the connecting arms 23 enclose a sharp angle g with the pushing direction R in the vertical direction V (direction of G-force, perpendicular to plane floor). This angle g is preferably between approximately 3° and 50°, more preferably between approximately 5° and 30°, most preferably around 10°. The handle bar 4 comprises two first extending portions (not shown here) or one first extending portion by which the terminal 5 is coupled to the handle bar 4. The first extending portions 16 are shown for example in Fig. 6a-6c. The first extending portions each have an axis ED along which the first extending portions extend. Each axis ED is preferably parallel to a plane defined by the touchscreen 7 of the terminal. The axes ED of the first extending portions each enclose in the vertical direction V a sharp angle b. This angle b is preferably between approximately 3° and 50°, more preferably between approximately 5° and 30°, most preferably around 20°. Therefore, the angle a between the axes ED of the first extending portions and the axes CA of the connecting arms 23 is the addition of the angles b and g. This angle a is therefore preferably between approximately 6° and 100°, more preferably between approximately 10° and 60°, most preferably around 30°. In the horizontal direction H which is perpendicular to the vertical direction V, the axes ED of the first extending portions are preferably parallel to the pushing direction R, however it is not required that the axes ED of the first extending portions are parallel to the pushing direction R. They may also be tilted being parallel to each other and each one enclosing a sharp angle with the pushing direction R, which is parallel to the horizontal direction H and parallel to the plane floor and perpendicular to the direction of the G-force. In the horizontal direction H, the axes CA of the connecting arms 23 are each slightly shaped inwards towards the centre of the wagon 2 and the axis of the length axis LAC of the shopping cart 1 which is considered central to the wagon 2. The axes CA of the connecting arms 23 are therefore not parallel to each other in the horizontal direction H. As indicated in Fig. 4a, the angle g' between the pushing direction R and an axis CA of one connecting arm 23, is a sharp angle that is preferably between approximately 1° and 15°, most preferably between approximately 2° and 10°.

Fig. 2b is a scheme of the shopping cart 1 of Fig. 1a in a detailed view again appearing as an explosion view in which the handle bar 4 appear as being decoupled from the wagon 2. It is indicated that the connecting arms 23 each have a recess 42 for engaging with a connecting portion 43 of the wagon 2. The cross section of the recess 42 may be shaped oval as in the present figure. Alternatively, the recess 42 may have any shape that is suitable for engaging with the connecting portion 43 of the wagon 2. The connecting arms 23 are affixed to the wagon 2 via the recess 42 and the connecting portions 43 of the wagon 2 by means of a fixation element 20, like a nut, and a counter fixation element 21, like a screw. When the connecting arms 23 are stuck onto the connecting portions 43 of the wagon 2, the counter fixation elements 21 may be inserted into a bore hole of each one of the connecting arms 23 and fixed by the fixation element 20 by means of a screwing movement, for example.

In Fig. 2b, it is also indicated that the terminal includes an optical output 17 on its upper edges being extended partially around the touchscreen 7 over the rounded edges of the terminal 5. When the user pushed the shopping cart 1 into the pushing direction R, the optical output 17 is visible to the user. Typically, for most heights of the users the touchscreen 7 faces the eyes and/or the face of a user while pushing the shopping cart 1, such that information displayed on the touchscreen 7 is visible to the user.

The processor may be configured to control the optical output 17 to emit light of a predefined color and/or at a predefined frequency which is characteristic for a certain information or situation. In below table 1 several situations are listed as examples in which light of a predefined color and/or blinking pattern is emitted being characteristic to the situation and being used to communicate with the user and/or personnel of the shop.

**Table 1**

| **situation** | **color** | **blinking pattern** | **comment** |
|---|---|---|---|
| battery board not present | purple | slow blinking (2 s) | |
| transportation mode starting | cyan | fast blinking (500 ms) for 10 s | |
| transportation mode active | - | | no power peripherals |
| charging (precharge) | yellow | slow blinking (1,5 s) | |
| charging (CC/CV) | yellow | constant | |
| battery failsafe started | amber | fast blinking (300 ms) for 3 s | |
| battery failsafe active | red | constant | no power peripherals |
| battery critical | yellow | slow blinking (1 s) | |
| battery full and charger connected | green | constant | |
| software defined color | - | - | |

Fig. 3a is a scheme of a fixation element 20 (right) and a counter fixation element 21 (left) for fixation of a handle bar 4 on a wagon 2 according to an embodiment. The fixation element 20 is a nut in this example and the counter fixation element 21 is a screw. The fixation element 20 and the counter fixation element 21 should have compatible fixing means such as compatible threads.

Fig. 3b is an explosion scheme of the handle bar 4 in proximity of the wagon 2 of Fig. 1b in a detailed view denoted "A". It is indicated that the fixation element 20 and the counter fixation element 21 are moved towards each other in a perpendicular direction to the axis CA of the connecting arm 23 on the right side to engage with each other and reach through holes comprised by the connecting arm 23 and the connecting portion 43 of the wagon 2. The connecting portion 43 of the wagon 2 preferably also extend in the direction (parallel to) of the axis CA of the connecting arm 23, such that the connecting arm 23 can receive the connecting portion 43 by the recess 42 and engage therewith. The connecting arm 23 and the connecting portion 43 are therefore already engaged and/or coupled with each other. The fixation element 20 and the counter fixation element 21 provide a higher degree of fixation such that the connecting arm 23 and the connecting portion 43 are not uncoupled easily and/or by mistake and only an unscrewing movement may release the fixation between the connecting arm 23 and the connecting portion 43.

Fig. 4a is a scheme of the terminal 5 on the handle bar 4 and being coupled to the handle bar 4 of Fig. 1a in a detailed view as it would be seen when used by a user while pushing the shopping cart 1. This drawing shows components of the terminal 5 which are visible to a user when pushing the shopping cart 1. The connecting arms 23 are visible which are formed slightly pointing towards the center of the wagon 2 at the angle g' with the pushing direction R, indicated on the right side of the drawing. The connecting arms 23 are symmetrical to each other in that they are directed in parallel to each other with respect to the vertical direction (perpendicular to the horizontal direction H). They are shaped towards the center of the wagon 2 to the same extent.

Further, the user views a left and a right gripping portion 24 on the handle bar 4. The gripping portions 24 extend from the center of the handle bar 4 or from the position where the terminal 5 ends on both sides to the left and to the right being respectively connected with and/or coupled to the left and the right connecting arms 23. The gripping portions 24 are ergonomically formed to provide a good grip for the user's hands and to make it pleasant and/or comfortable to hold tight to the handle bar 4. The gripping portions 24 may be portions of the handle bar 4 which are covered with a soft polymer. The gripping portions 24 may also comprise a germ-killing material and/or a material which may be removed after use, such as a sheet on a roll onto which multiple sheets are wound and/or a material that can be disinfected, potentially being resistant to UV radiation.

The user also views the touchscreen 7 and the optical output 17 which comprises two stripes each one comprising a light source or multiple light sources and partially surrounding the touchscreen 7, i.e., a display along the upper rounded edges of the terminal 5/the terminal housing 6. The optical output 17 is also visible to persons in other positions and from other perspectives, whereas the content displayed on the touchscreen 7 is preferably only visible to the user himself, which prevents other customers from seeing confidential information such as a code number of a credit card which may be entered by the user if required.

The user also views the position to which the user can present the printed code, indicated by the symbol "SCAN" near the right lower edge. This symbol indicates the position of the scanner element 9 which may comprise a barcode reader and/or a camera for capturing an image of the printed code presented by the user. Preferably, the scanner element 9 is positioned in the terminal at a certain depth with respect to the surface of the housing 6 to prevent a user from presenting a printed code a distance that is too close to be read and/or captured due to the focal length. Therefore, the scanner element 9 itself may very likely not be visible to the user in his position when pushing the shopping cart 1.

The user also views the wagon 2 in a forward direction indicated by the upper arrow and potentially the content /the products placed in the main receiving area of the wagon 2.

Fig. 4b is a scheme of the terminal 5 on the handle bar of Fig. 1a in a view from the side of the main receiving area. The view could also be a view onto the backside of the terminal 5 and the handle bar 4 when the handle bar would be disassembled from the wagon and turned around. It is indicated that the housing 6 provides a first opening 13 for inserting a camera 10 which may be covered by a protection/security glass 13a. The viewing field of the camera 10 through the first opening 13 is directed towards the wagon and the main receiving area when the handle bar 4 with the terminal 5 is coupled to the wagon.

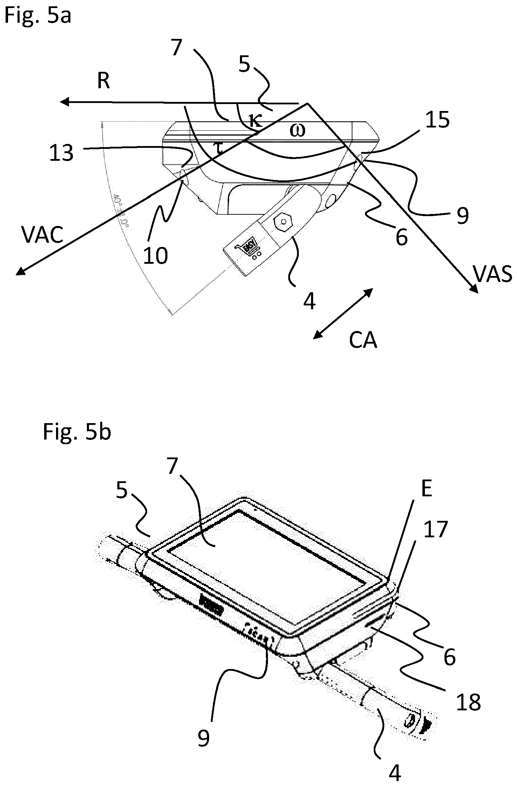

Fig. 5a is a scheme of the terminal 5 on the handle bar 4 of Fig. 1a in a detailed side view. The first opening 13 for the camera 10 defines the viewing axis VAC of the camera 10 directed towards the main receiving area, i.e., the lower front side of the user when pushing the shopping cart. A second opening 15 for inserting the scanner element 9 at a certain depth, defines the viewing axis VAS of the scanner element 9 directed towards the user, i.e. the lower back side of the user when pushing the shopping cart. The viewing axis VAC of the camera 10 encloses a sharp angle k with the pushing direction R between approximately 10° and 50°, preferably between 20° and 45°, when the terminal 5 is coupled to the handle bar 4 and the handle bar 4 is coupled to the wagon. The viewing axis VAS of the scanner element 9 encloses an obtuse angle t with the pushing direction R between approximately 100° and 140°, preferably between approximately 110° and 130°, when the terminal 5 is coupled to the handle bar 4 and the handle bar 4 is coupled to the wagon. The angle w between the viewing axis VAC of the camera 10 and the viewing axis VAS of the scanner element 9 (no matter if the terminal 5 is coupled to the handle bar 4 and the handle bar 4 is coupled to the wagon or not) is preferably between approximately 50° and 130°, preferably between approximately 75° and 100°.

Fig. 5b is a scheme of the terminal 5 on the handle bar 4 of Fig. 1a in a perspective view from above. It is indicated that the optical output 17 positioned on the right upper edge E of the terminal 5 is also visible from this perspective. Further, an interface 18 for energy and/or data transfer, which may be a USB port, is indicted below the optical output 17 on the right side of the terminal.

Fig. 6a is a scheme demonstrating the general concept of how the terminal 5 is coupled and/or affixed to the handle bar 4 according to an embodiment as it would be seen in the position when a user pushes the shopping cart. A mounting element 12 which may an element of the handle bar 4 and/or affixed to the handle bar 4 comprises two first extending portions 16 which extend away from the handle bar 4 in a parallel direction to each other. In this particular embodiment of Fig. 6a, the extending direction ED of the first extending portions 16 is perpendicular to the length axis LAH of the handle bar 4. In Fig. 6a, the terminal 5 is not yet coupled with the mounting element 12 of the handle bar 4. The terminal 5 is moved along the movement direction MD to engage with the first extending portions 16 via mating portions 11. In other words, each mating portion 11 compatible with a first extending portion engages with the first extending portion to couple the terminal 5 with the handle bar 4 when moved along the movement direction MD. This mechanism can be as simple as shown in the figures, namely each mating portion 11 being a recess and/or hole receiving the first extending portion 16 at least partially. Alternatively, the mating portion 11 may comprise a component of a coupling system, such as a slider which engages with a rail of the first extending portions 16.

Fig. 6b is another scheme demonstrating the general concept of how the terminal 5 is affixed and/or coupled to the handle bar 4 of Fig. 6a as it would be seen when used by a user while pushing the shopping cart. In this state, the movement along the movement direction MD has been performed and the terminal 5 is coupled to the handle bar 4. It may be possible that the terminal is further affixed to the mounting element 12 via securing elements (not shown in present figure) for securing and/or fixing the terminal to the mounting element 12, as for example screws. The securing elements may avoid the decoupling of the terminal 5 from the mounting element 12 / the handle bar 4. The movement direction MD is preferably parallel to the extending direction ED of the first extending portions 16, which may preferably be parallel to the length axis of each first extending portion 16.

Fig. 6c is a scheme demonstrating the general concept of how the terminal 5 is affixed to the handle bar 4 according to another embodiment. In this embodiment, the first extending portions 16 and the length axis of the handle bar 4 are tilted in the horizontal plane against the pushing direction R and the length axis LAC of the shopping cart.

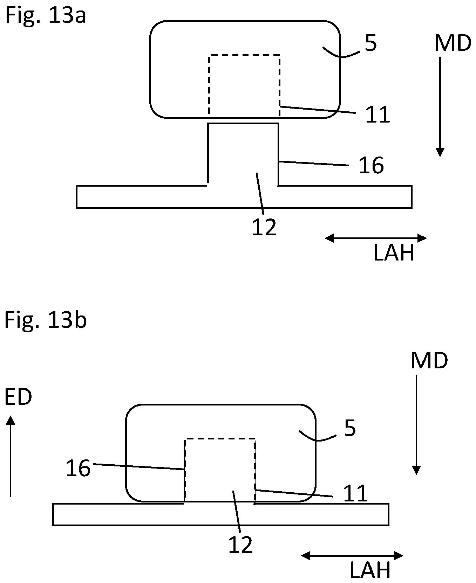

As an alternative to the coupling concept of Fig. 6a-6c, using two first extending portions 16, Fig. 13a and Fig. 13b illustrate the analogous concept with only one single first extending portion 16 and only one single mating portion 11. In this embodiment, it may be preferable to provide the first extending portion 16 of the mounting element 12 with a cross section, in a plane perpendicular to the extending direction ED, which is not round but shaped in the form of an oval or a polygonal shape. To predefine the orientation of the terminal 5 with respect to the handle bar 4, a not and a ridge (not shown) maybe placed respectively on the first extending portion 16 and the mating portion 11.

If one first extending portion 16 is provided on the mounting element 12:

The cross section of the one single first extending portion 16 of the mounting element 12 may preferably be configured to prevent the terminal 5 from rotating around the first extending portion 16. This is given if the cross section is shaped in the form of an oval or a polygon, such as an orthogon (rectangle particularly square for example). In case of an orthogon or an oval, the width of the one single first extending portion 16 which may particularly be measured in parallel to the length axis LAH of the handle bar 4, may be between three quarters and one quarter of the width of the terminal (also measured in parallel to the length axis LAH of the handle bar 4 when the terminal 5 is mounted to the mounting element 15). The one single mating portion 11 of the terminal 5 may have features in substantially the same width as the one first extending portion 16 to compliment the first extending portion 16 and to engage therewith. In other words, the first extending portion 16 should be broad in width along a parallel to the length axis LAH of the handle bar 4, to prevent the terminal 5 from rotating around the first extending portion 16. In addition, the first extending portion 16 may also be much thinner compared to the width, for example approximately between 0,5 cm to 3 cm. The length of the first extending portion 16 along a perpendicular direction to the length axis LAH of the handle bar 4 may be shorter than the width, equal to the width or longer than the width. It is preferred to provide a good support to the terminal 5 such that the length of the first extending portion 16 might preferably be larger than approximately a third of its width. The first extending portion 16 may also be larger than approximately a quarter or a third of the terminal's 5 length (also being perpendicular to the length axis LAH of the handle bar 4 when the terminal 5 is coupled to the mounting element 12 of the handle bar 4). For example, the terminal 5 might in one example be 20 cm wide and 20 cm long. In that case, the first extending portion 16 may have a cross section of an orthogon, defined by the width and the thickness, and the width may be 15 cm, the thickness may be 1 cm and the length may be 12 cm. This only serves as a non-limiting example for better understanding the invention and how the dimensions of the first extending portion 16 and the terminal 5 might be realized.

If two first extending portions 16 are provided on the mounting element 12:

The cross section of each one of the two first extending portions 16 of the mounting element 12 can be arbitrary. The shapes of the cross sections of both first extending portions 16 may be identical to each other or different from each other. In general, the shapes of both first extending portions 16 may be identical to each other or may differ from each other. Each one of the cross sections may be shaped round or in the form of an oval or a polygon, such as an orthogon (square for example). Preferably, the shape of the cross section of both first extending portions 16 is the shape of an orthogon. In case of an orthogon or an oval, the width between the outer edges of the first extending portions 16, i.e. the distance between the right and the left sides of the first extending portions 16 which are facing in opposite directions parallel to the length axis LAH of the handle bar 4, and which may particularly be measured in parallel to the length axis LAH of the handle bar 4, may be between three quarters and one quarter of the width of the terminal (also measured in parallel to the length axis LAH of the handle bar 4 when the terminal 5 is mounted to the mounting element 15). The two mating portions 11 of the terminal 5 may have features in substantially the same width as the one first extending portion 16 to compliment the first extending portions 16 and to engage therewith. In other words, the distance between the outer edges of the first extending portions 16 should be broad in width along a parallel to the length axis of the handle bar 4, to provide the terminal 5 with stability and support.

Moreover, the first extending portions 16 may also be much thinner compared to the distance between the outer edges of the first extending portions 16, for example approximately between 0,5 cm to 3 cm.

The width of each one of the first extending portions 16 may be between a tenth and a quarter of the distance between the outer edges of the first extending portions 16. If the outer edges of the first extending portions 16 are 20 cm apart from each other, the width of each one of the first extending portions 16 would be between 2 cm and 5 cm. The values might also deviate therefrom but a width of each one of the first extending portions 16 which is between a tenth and a quarter of the distance of their outer edges to the right and the left, provides the terminal 5 with a good stability and/or support.

The length of the first extending portions 16 along a perpendicular direction to the length axis LAH of the handle bar 4 may be shorter than, equal to or longer than the width/distance between the outer edges of the first extending portions 16. It is preferred to provide a good support to the terminal 5 such that the length of the first extending portions 16 might preferably be larger than approximately a third of the width/distance between the outer edges of the first extending portions 16. The first extending portions 16 may also be larger than approximately a quarter or a third of the terminal's 5 length (also being perpendicular to the length axis LAH of the handle bar 4 when the terminal 5 is coupled to the mounting element 12 of the handle bar 4). For example, the terminal 5 might in one example be 20 cm wide and 20 cm long. In that case, the first extending portions 16 may each have a cross section of an orthogon, defined by the width and the thickness of each first extending portion 16, and the distance between the outer edges of the two first extending portions 16 may be 15 cm, the thickness of the two first extending portions 16 may be 1 cm and the length of the two first extending portions 16 may be 12 cm. This only serves as a non-limiting example for better understanding the invention and how the dimensions of the two first extending portions 16 and the terminal 5 might be realized.

In general, the extending portion(s) 16 may be received by the mating portion(s) 11, i.e., the extending portion(s) 16 are at least partially surrounded by the mating portion(s) 11. Alternatively or additionally, the extending portion(s) 16 can be engaged with the mating portion(s) 11 for example with engagement means such as one or more according slider-rail system(s).

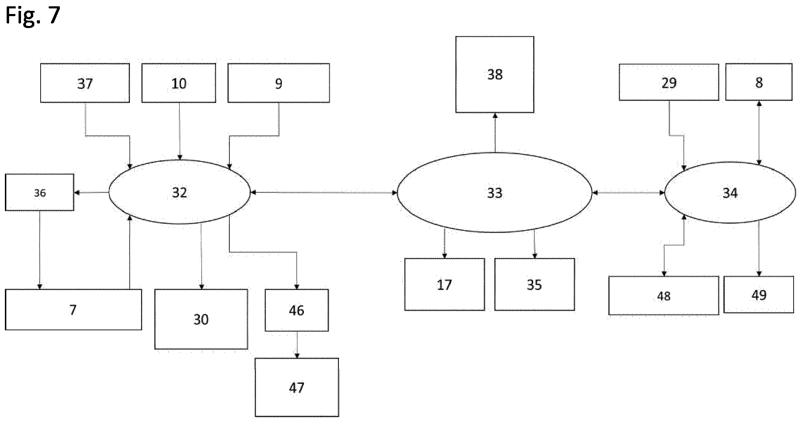

Fig. 7 is a scheme of electronic elements and/or components comprised by the terminal and/or connected to the terminal. The terminal comprises a processor 32, which may be considered a main board, an IO Board 33 and a charger board 34. The processor 32 may manage main functions of the terminal such as functions related to the camera and the scanner element for example. The IO Board 33 may manage functions such functions related to GPS, GSM, emission of light via LEDs and power management. The processor 32, the IO Board 33 and the charger board 34 are configured to communicate with each other, particularly, the processor 32 with the IO Board 33 and the IO Board 33 with the charger board 34, as indicated by the arrows.

The processor 32 may be electrically (and/or mechanically) connected to and/or in communication with the following elements: an ambient light sensor 37, particularly being integral with the terminal; the camera being integral with the terminal; the sensing element 9 being integral with the terminal; a WiFi 46 and WiFi antennas 47; an indoor navigation 30 (system), of which elements thereof may be integral with the terminal; the touchscreen 7 being integral with the terminal; and a display driver 36 which is preferably integral with the terminal and which is also connected to the touchscreen 7 / display. The processor 32 may not just receive and/or transmit data from/to these said elements, the processor 32 may preferably control and/or drive these elements based on commands which may be sent from the processor 32 to these elements. Transferred data may be in general comprise sensed data, commands, data received from a user, preset data, an the like. In general, the communication is a one- (only receive data) or even two-way communication (receive and transmit data).

The IO Board 33 may be electrically (and/or mechanically) connected to and/or in communication with the following elements: GPS and/or GSM antennas 38 which may be integral with the terminal; one or more optical outputs 17 which may be integral with the terminal, particularly light emitting elements such as LEDs; and one or more sound outputs 35 which may be integral with the terminal, such as a beeper used in conjunction with the scanner element 9. The IO Board 33 may not just receive and/or transmit data from/to these said elements, the IO Board 33 may preferably control and/or drive these elements based on commands which may be sent from the IO Board 33 to these elements.

The charger board 34 may be electrically and/or mechanically connected to and/or in communication with the following elements: one or more temperature sensor 29 which may be integral with the terminal for sensing the temperature of the environmental air and/or the energy storage unit 8, for example; the energy storage unit 8 which is integral with the terminal; a magnetic power connector 48 which may be integral with the terminal; and a heatfoil 49 which may be integral with the terminal.

Elements which are integral with the terminal may particularly be enclosed in the housing of the terminal.

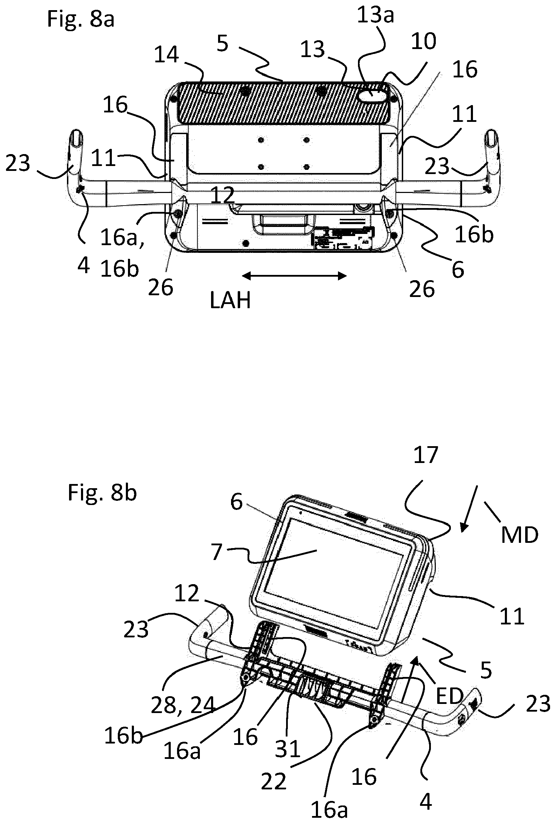

Fig. 8a is a scheme of the terminal 5 on the handle bar 4 of Fig. 1a in a view from below when being coupled to the shopping cart or when being uncoupled and tilted. Several details of the terminal 5 and the mounting element 12 are displayed. It can be seen how the two first extending portions 16 of the mounting element 12 form a smooth surface with the terminal 5 when being engaged with each other. Further, bore holes 16b are indicated at the second extending portions 16a. The terminal 5 may be affixed to the mounting element 12 by means of securing elements 26, which may for example be screws which might be screwed into a thread of the bore holes 16b.

The opening 13 for the camera 10 is visible and a security glass in front of the camera 10 is indicated. The mating portion 11 of the terminal 5 is not visible but indicated in the present drawing. It also becomes apparent from this drawing how the connecting arms 23 are formed in a direction towards each other.

Fig. 8b is a scheme demonstrating the concept of how the terminal 5 is affixed to the handle bar 4 of Fig. 1a in a perspective front view. This drawing corresponds to the situation which is shown in Fig. 6a being however a more specific or different embodiment which relies on a mating/engagement system with a dovetail guide on the first extending portions 16. The terminal 5 is coupled to the mounting element 12 of the handle bar 4 by sliding the terminal along the first extending portions 16 in the movement direction MD such that the mating portions 11 (counterpart of dovetail guide) of the terminal 5 can engage with the dovetail guide of the first extending portions 16. The movement direction MD is substantially parallel to the extending direction ED of the first extending portions 16.

The mounting element 12 has a rib structure 31 for an improved stability while having less weight. Further, the mounting element 12 comprises an additional supporting portion 22 for providing support to the terminal 5 when being coupled to the handle bar 4 and potentially also for contributing to the guiding of the movement direction MD.

It is visible in this drawing that the mounting element 12 is integral with the handle bar 4. Possibly, the sheathing element 28 of the handle bar 4 may be produced with the mounting element 12 from a single piece and/or as a single piece, as for example by injection moulding and/or 3D-Printing. The sheathing element 28 may therefore have a tunnel for receiving the core element (not shown in this drawing) which is described further below.

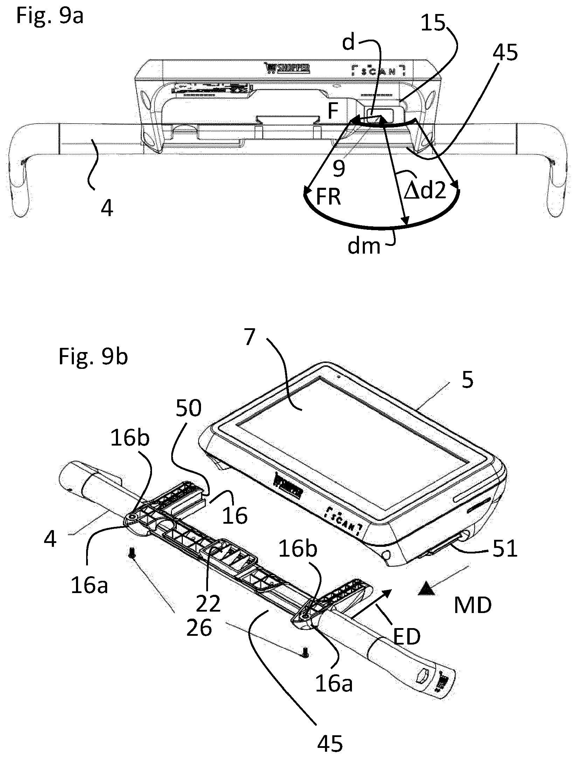

Fig. 9a is a scheme of the terminal 5 on the handle bar 4 of Fig. 1a in a view from the below front side from which the user would present a printed code to the scanner element. An opening 15 for the scanner element 9 in indicated the outer front surface F of the housing 6 of the terminal 5. The scanner element 9 is positioned inside the opening 15 for the scanner element 9 at a depth d which is configured to achieve a focal range FR of the scanner element 9 for code reading distances Dd2 which are larger than the depth d.

The opening 15 for the scanner element 9 may be considered a hole and/or recess in a plane defined by the outer front surface F of the housing 6. The scanner element recess 45 which is also indicated in this drawing is a recess formed in the mounting element 12 such that the scanner element 9 is neither blocked by the housing 6 nor by the mounting element 12 and can "view" a presented code right in front of the scanner element 9.

Code reading distances Dd2 are distances between the scanner element 9 and a code presented to the scanner element 9. The depth d may be considered a distance between the scanner element 9 and the outer front surface F of the housing 6. The outer front surface F of the housing 6 may be the surface of the housing 6 at a predefined position serving as a reference point to define the depth d. The predefined position in the outer front surface F of the housing 6 may therefore define how close a user can approach the scanner element 9 with a printed code such that the scanner element 9 is able to scan and/or read the code and/or capture a sharp readable image of the printed code. At distances which are larger than a maximum distance dm the scanner element 9 and/or the processor can however not recognize the code anymore.

Fig. 9b is another scheme demonstrating the concept of how the terminal 5 is affixed to the handle bar 4 of Fig. 1a in another perspective front view. Fig. 9b is repetitive of Fig. 8b viewed from a slightly different viewing angle. In Fig. 9b the mating portion in the form of a rail slider 51 is visible. The rail slider 51 is configured to mate/ engage with the dovetail guide, i.e., a rail 50 of the mounting element 12 on each of the first extending portions 16. Further, Fig. 9b reveals that the additional supporting portion 22 is slightly elevated as compared to the plane which is defined by the residual components of the mounting element 12. It is also indicated that the securing elements 26 are screwed into the boreholes 16b provided on the second extending portions 16a and boreholes with a thread in the housing 6 of the terminal 5 from below.

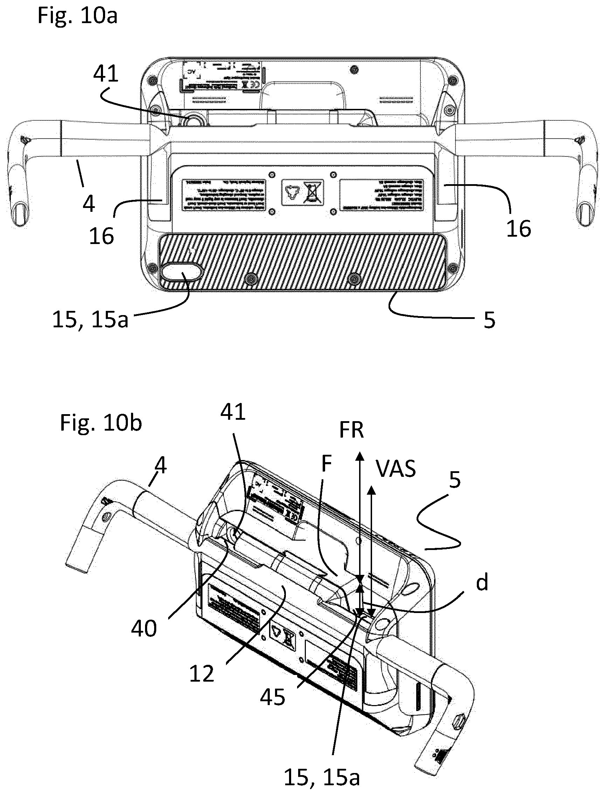

Fig. 10a is another scheme of the terminal 5 on the handle bar 4 of Fig. 1a in a view from below when being coupled to the shopping cart or when being uncoupled and tilted. Fig. 10a is a similar drawing as shown in Fig. 8a being rotated about 180° and having a higher resolution. Fig. 10a reveals an on-off-button 41 on the terminal 5 which is somewhat hidden but can be reached by a user from underneath. The on-off-button 41 can activate/deactivate the terminal 5 by a pressing operation with the finger of a user.

Fig. 10b is a scheme of the terminal 5 on the handle bar 4 of Fig. 1a in another tilted perspective view from below when being coupled to the shopping cart or when being uncoupled and tilted. This drawing can give a good insight into the definition of the depth d and the focal range FR of the scanner element 9 and the viewing axis VAS of the scanner element. Further, the scanner element recess 45 in the mounting element 12 as well as the (second) opening 15 for the scanner element 9 is visible in this drawing. Moreover, Fig. 10b displays the on-off-button 41 and the operation recess 40 in the mounting element 12 which allows to reach the on-off-button 41 with the user's finger and/or a tool. The on-off-button 41 might also be set-back from the surface of the housing 6 to hide its position and avoid an unauthorized operation by a user.

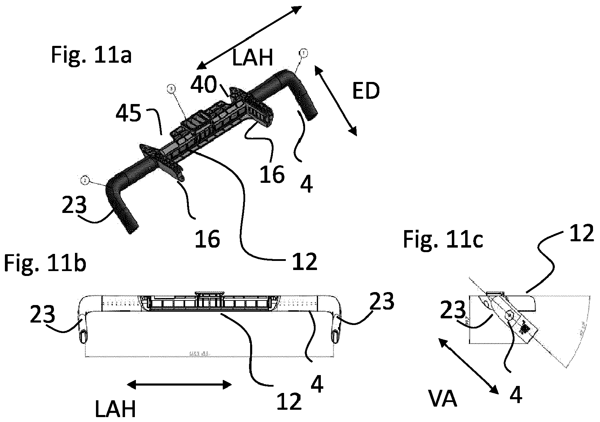

Fig. 11a is a scheme of the handle bar 4 of Fig. 1a without the terminal to display the mounting element 12 in a perspective view in more detail.

Fig. 11b is a scheme of the handle bar 4 of Fig. 1a without the terminal to display the mounting element 12 in another perspective view in more detail, namely in a view from the side of the main receiving area.

Fig. 11c is a scheme of the handle bar 4 of Fig. 1a without the terminal to display the mounting element 12 in another perspective view in more detail, namely in a side view.

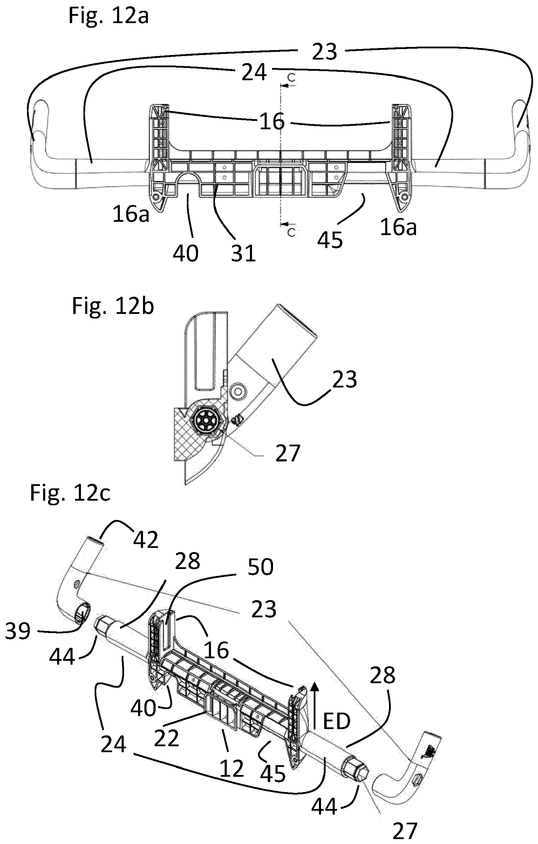

Fig. 12a is a scheme of the handle bar 4 of Fig. 1a without the terminal to display the mounting element 12 in a detailed view as it would be seen when pushed by a user of the shopping cart. Particularly, the operation recess 40 and the scanner element recess 45 are displayed in more detail.

Fig. 12b is a scheme of the handle bar 4 of Fig. 1a without the terminal to display the mounting element 12 and the core element 27 of the handle bar 4 in a detailed side view

Fig. 12c is a scheme of the handle bar 4 of Fig. 1a without the terminal to display the mounting element 12 in a tilted perspective view from the front side. Fig. 12c is an explosion view showing the three parts, namely the right and the connecting arm 23 and the central piece of the handle bar 4 comprising the core element 27 which can be recognized by its end portions 44 on the right and the left sides, the sheathing element 28 which at least partially encloses the core element 27, and the mounting element 12 on which the rail 50 of the dovetail guide can be seen in more detail. Each connecting arm 23 has a reception recess 39 in a cross-sectional shape that matches the shape of the core element 27 on its end portions 44.

Fig. 13a is a scheme demonstrating the general concept of how the terminal 5 is coupled and/or affixed to the handle bar 4 according to another embodiment as it would be seen when used by a user while pushing the shopping cart being analogue to the Fig. 6a but relying on only one first extending portion 16 and one mating portion 11 instead of two first extending portions 16 and two mating portions 11 as shown in Fig. 6a.

Fig. 13b is another scheme demonstrating the general concept of how the terminal is affixed to the handle bar of Fig. 13a as it would be seen when used by a user while pushing the shopping cart being analogue to the Fig. 6b but relying on only one first extending portion 16 and one mating portion 11 instead of two first extending portions 16 and two mating portions 11 as shown in Fig. 6b.

The concept demonstrated in Fig. 13a and Fig. 13b has been described further above, already. An alternative to the concepts of Fig. 6a and Fig. 6b and Fig. 13a and Fig. 13b may rely on more than two first extending portions 16 and two mating portions 11, as for example three, four, five six, seven or more first extending portions 16 and correspondingly three, four, five six, seven or more two mating portions 11.

**Reference signs**

| | | | |
|---|---|---|---|
| 1 | shopping cart | 18 | interface for energy transfer, e.g., USB interface |
| 2 | wagon | 19 | rollers |
| 3 | main receiving area for products | 20 | fixation element for fixation of the handle bar on the wagon, e.g. nut |
| 4 | handle bar | 21 | counter fixation element for fixation of the handle bar on the wagon, e.g. screw |
| 5 | terminal | 22 | additional supporting portion of the mounting element |
| 6 | housing | 23 | connecting arms of the handle bar |
| 7 | touchscreen / touch display | 24 | gripping portion of the handle bar |
| 8 | energy storage unit / battery | 25 | lower receiving area for products |
| 9 | scanner element / barcode reader | 26 | securing elements for securing the terminal to |
| 10 | camera | 27 | core element of the handle bar, e.g. hollow steel core |
| 11 | mating portion for coupling with the first extending portions | 28 | sheathing element of the handle bar |
| 12 | mounting element | 29 | temperature sensors |
| 13 | first opening for camera | 30 | indoor navigation |
| 13a | security glass for first opening | 31 | rib structure |
| 14 | lower portion of the housing | 32 | processor / main board |
| 15 | second opening for scanner element | 33 | IO Board (GPS, GSM, LED, power management) |
| 15a | security glass for second opening | 34 | charger board |
| 16 | first extending portions of the mounting element | 35 | sound output / beeper |
| 16a | second extending portions of the mounting element | 36 | display driver / display controller |
| 16b | bore hole | 37 | ambient light sensor |
| 17 | optical output, particularly light emitting element, e.g., LEDs | 38 | GPS/GSM antennas |
| 39 | reception recess of a connecting arm | Δd2 | distances in the focal range of the scanner element between the scanner element and the product |
| 40 | operation recess | dm | maximum distance |
| 41 | on-off-button | E | upper edge of housing |
| 42 | recess on connecting arms for connecting with a connecting portion of the wagon | ED | extending direction of first extending portions |
| 43 | connecting portion of the wagon | F | outer surface front of the housing |
| 44 | end portion of the core element | α | angle between extending direction and connecting arm axes in vertical direction |
| 45 | scanner element recess in mounting element | β | angle between extending direction and pushing direction in vertical direction |
| 46 | WiFi | γ | angle between connecting arm axes and pushing direction in vertical direction |
| 47 | Wifi antennas | V | vertical direction |
| 48 | magnetic power connector | VAC | viewing axis of the camera |
| 49 | heatfoil | VAS | viewing axis of the scanner element |
| 50 | rail | LAH | length axis of the handle bar |
| 51 | rail slider | MD | movement direction |
| γ' | angle between connecting arm axes and pushing direction in horizontal direction | d | depth: distance between the scanner element to an outer front surface |
| κ | angle between viewing axis of the camera and the pushing direction | FR | focal range of scanner element |
| τ | angle between viewing axis of the scan- | H | horizontal direction |
| | ner element and the pushing direction | | |
| ω | angle between the viewing axis of the camera and the scanner element | R | pushing direction |
| Θ | angle between length axis of the handle bar and the pushing direction | LAC | length axis of the shopping cart |
| CA | connecting arm axes parallel to connecting direction of the handle bar to the wagon | | |

## Claims

1. Shopping cart (1) having a detachable terminal (5), the shopping cart (1) comprises:
a wagon (2) configured to be pushed in a pushing direction (R) and having a main receiving area (3);
a handle bar (4) configured to be coupled to the wagon (2) and for pushing the wagon (2) in the pushing direction (R), wherein the handle bar (4) comprises a mounting element (12); and
a terminal (5) configured to be coupled to the handle bar (4), wherein the terminal (5) comprises:
a housing (6) with one or more mating portions (11) configured to be coupled with the mounting element (12);
a touchscreen (7) configured to output information and to receive user input;
an energy storage unit (8) configured to supply the terminal (5) with energy;
a scanner element (9) configured to scan a code related to a product;
a camera (10) configured to capture an image of the main receiving area (3) when the terminal (5) is coupled to the handle bar (4); and
a processor (32) configured to identify the product by means of the code scanned by the scanner element (9) and to verify whether the identified product is visible in the image of the main receiving area (3) captured by the camera (10).

2. Shopping cart of claim 1, wherein the housing (6) comprises an opening (15) for the scanner element (9) in an outer front surface (F) of the housing (6), and/or wherein the scanner element (9) is positioned inside the housing at a depth (d) with respect to the opening (15) which is configured to achieve a focal range (FR) of the scanner element (9) for code reading distances (Δd2) which are larger than the depth (d).

3. Shopping cart (1) of claim 2, wherein the depth (d) is in a range between 0,5 cm and 8 cm, preferably between 1 cm and 3 cm.

4. Shopping cart (1) of claim 2 or 3, in which the opening (15) for the scanner element (9) defines a viewing axis (VAS) of the scanner element (9) which forms an obtuse angle (τ) with the pushing direction (R) when the terminal (5) is coupled to the handle bar (4).

5. Shopping cart (1) of any one of the preceding claims, wherein the housing (6) comprises an opening (13) for the camera (10) which defines a viewing axis (VAC) of the camera (10) which forms a sharp angle (κ) with the pushing direction (R) when the terminal (5) is coupled to the handle bar (4).

6. Shopping cart (1) of any one of the preceding claims, wherein the viewing axis (VAS) of the scanner element (9) and viewing axis (VAC) of the camera (10) enclose an angle (ω) which is between 150° and 80°, preferably between 120° and 90°.

7. Shopping cart (1) of any one of the preceding claims, wherein the terminal (5) further comprises an optical output (17) which is visible to a user when the terminal (5) is coupled to the handle bar (4), preferably comprising a plurality of LEDs.

8. Shopping cart (1) of claim 7, wherein the optical output (17) at least partially surrounds the touchscreen (7) and preferably wherein the optical output (17) is positioned at at least one an upper edge (E) of the housing (6).

9. Shopping cart (1) of claim 7 or 8, wherein the processor (32) is configured to control the optical output (17) to emit light of a predefined color and/or at a predefined frequency which is characteristic for a certain information.

10. Shopping cart (1) of any one of the preceding claims, wherein the terminal (5) further comprises at least one of the following elements: a GPS antenna as an element of a geofence system, a light sensor configured to sense ambient light, a sound output comprising an alarm.

11. Shopping cart (1) of claim 10, wherein the processor (32) is configured to adjust a light emitted by the touchscreen (7) based on the ambient light sensed by the light sensor.

12. Shopping cart (1) of claim 10 or 11, wherein the sound output is configured to output an instruction from shop personnel and/or wherein the sound output is a beeper configured to output a beeping signal when the scanner element (9) scans a presented code.

13. Shopping cart (1) of any one of the preceding claims, the terminal (5) further comprises:
a movement recognition element configured to sense a movement in front of the scanner element (9), and/or
a light emitting element configured to emit a light, particularly a red light, in front of the scanner element (9), preferably
wherein the light is emitted by the light emitting element when a movement is sensed by the movement recognition element.

14. Shopping cart (1) of any one of the preceding claims, wherein the terminal (5) further comprises a data transfer interface for transferring data with an additional device, particularly a USB interface and/or the data transfer interface is configured to be coupled to a credit card terminal and/or a credit card reader.

15. Shopping cart (1) of claim 14, wherein the opening (15) for the scanner element (9) is located in an outer front surface (F) of the housing and the opening (13) for the camera (10) is located in an rear surface of housing and/or the opening (15) for the scanner element (9) and the the opening (13) for the camera (10) facing in opposite directions.
